# EUROPÄISCHE PATENTSCHRIFT

(11) **EP 2 161 091 B1**
(45) Veröffentlichungstag und Bekanntmachung des Hinweises auf die Patenterteilung: **05.11.2014**
(21) Anmeldenummer: 09010531.3
(22) Anmeldetag: 17.08.2009
(51) Int. Cl.: B23D 47/02, B27B 5/22

(54) **Kreissäge**
Circular saw
Scie circulaire

(30) Priorität: 09.09.2008 DE 202008011969 U
(43) Veröffentlichungstag der Anmeldung: 10.03.2010
(73) Patentinhaber: Scheppach Fabrikation von Holzbearbeitungsmaschinen GmbH, 89335 Ichenhausen (DE)
(72) Erfinder: Pfaff, Ernst, 86150 Augsburg (DE); Windrich, Wolfgang, 89358 Ettenbeuren (DE)
(74) Vertreter: Munk, Ludwig

(56) Entgegenhaltungen:
- DE-U1-202006 008 586
- DE-U1-202007 006 049
- JP-A- 2000 176 901
- US-A- 4 860 807
- US-A- 5 863 052

## Beschreibung

Die Erfindung betrifft eine Kreissäge, insbesondere Baukreissäge, mit einem einen vom Kreissägenblatt durchgriffenen Maschinentisch aufnehmenden Maschinengestell , das als Rohrgestell ausgebildet ist und aus zwei Seitenteilen besteht, die jeweils ein Oberteil mit quer zur Tischebene verlaufenden Schenkeln und wenigstens einem parallel zur Tischebene verlaufenden Schenkel aufweisen, wobei von den quer zur Tischebene verlaufenden Schenkeln einen unteren Gestellbereich bildende, umklappbare Verlängerungen abgehen.

Eine Kreissäge dieser Art ist aus der JP 2000 17 69 01 A bekannt. Bei dieser bekannten Anordnung liegt der Maschinentisch mit seiner Unterseite auf dem Maschinengestell auf, das zwei Seitenteile mit U-förmig ausgebildeten Oberteilen besitzt, deren nach oben sich erstreckende Schenkel an ihren oberen Enden von an der Unterseite des Maschinentisches angebrachten Halteplatten umfasst und hieran befestigt sind. Die von den Oberteilen nach unten abgehenden, umlegbaren Verlängerungen sind gegenüber den quer zur Tischebene sich erstreckenden Schenkeln der Oberteile achsversetzt und durch trapezförmige Scharnierteile hieran angelenkt. Diese bekannte Anordnung erweist sich daher als nicht stabil und dennoch leicht genug.

Eine weitere Tischkreissäge gebräuchlicher Art ergibt sich beispielsweise aus der DE 20 2006 008 586 U1. Auch hierbei liegt der vom Kreissägenblatt durchgriffene Maschinentisch auf dem Maschinengestell auf. Dieses besteht hier aus vier an den Ecken des Maschinentisches angebrachten, durch Wand- und Versteifungsbleche miteinander verbundenen Eckwinkeln. An die nach unten sich erstreckenden Schenkel des vorderen und hinteren Eckwinkelpaars schließen H-förmige Gestellteile an, die umlegbar sind und deren Seitenschenkel als Verlängerungen der oberen Eckwinkel fungieren. Eine ähnliche Anordnung ist aus der DE 20 2007 006 049 U1 bekannt. Auch diese bekannten Anordnungen erweisen sich als nicht einfach und nicht leicht genug.

Hiervon ausgehend ist es daher die Aufgabe der vorliegenden Erfindung, eine Kreissäge eingangs erwähnter Art mit einfachen und kostengünstigen Mitteln so zu verbessern, dass nicht nur ein vergleichsweise geringes Lager- und Transportvolumen, sondern auch eine vergleichsweise leichte und dennoch stabile Bauweise erreicht werden.

Diese Aufgabe wird erfindungsgemäß dadurch gelöst, dass der Maschinentisch von den Seitenteilen des Maschinengestells flankiert ist, dass die Oberteile der Seitenteile als in sich geschlossene Rechteckrahmen ausgebildet sind, dass der Maschinentisch mit seinen Längsseiten an einem jeweils benachbarten, oberen, tischparallelen Schenkel eines Rechteckrahmens anliegt und hiermit verschraubt ist und dass die von den quer zur Tischebene verlaufenden Schenkeln abgehenden Verlängerungen durch T-förmige Knotenbleche schwenkbar an die Rechteckrahmen angeschlossen sind, wobei die Verlängerungen mit ihrem oberen Ende an einem T-Schenkel des zugeordneten Knotenblechs befestigt sind, dessen mittlerer T-Schenkel im einem anschließenden unteren Rahmenschenkel zugewandten Bereich einer Rahmenecke eines Rechteckrahmens schwenkbar gelagert ist und dessen weiterer T-Schenkel als Anschlag fungiert, der bei aufgerichteter Verlängerung am unteren Endbereich eines benachbarten, quer zur Tischebene verlaufenden Schenkels eines Rechteckrahmens zur Anlage kommt.

Mit diesen Maßnahmen wird die oben genannte Aufgabe auf höchst einfache und kostengünstige Weise gelöst. Wenn die Verlängerungen aufgeklappt sind, ergibt sich ein freistehendes Maschinengestell mit der gewünschten Arbeitshöhe des Maschinentisches. Für die Lagerung und den Transport können die Verlängerungen umgeklappt werden, wodurch sich die Höhe des Maschinengestells und dementsprechend auch das Volumen entsprechend reduzieren. Vorteilhaft kann die erfindungsgemäße Anordnung in einer derartigen Stellung der Verlängerungen auch als auf einen Tisch auflegbare Tischmaschine Verwendung finden, was die Einsatzbreite erhöht. Im freistehenden Zustand ergeben die T-förmigen Anschlüsse einen zuverlässigen Anschlag und sicheren Stand. Die Ausbildung des Maschinengestells als Rohrgestell, das lediglich zwei den Maschinentisch seitlich flankierende Seitenteile mit durch rechteckförmige Rohrrahmen gebildeten Oberteilen besitzt, deren obere, horizontale Schenkel den Maschinentisch zwischen sich aufnehmen und an dessen Längsseiten angeschlossen sind, ergibt dabei eine besonders leichte und dennoch stabile Bauweise.

Vorteilhafte Ausgestaltungen und zweckmäßige Fortbildungen der übergeordneten Maßnahmen sind in den Unteransprüchen angegeben und aus der nachstehenden Beispielsbeschreibung anhand der Zeichnung näher entnehmbar.

In der nachstehend beschriebenen Zeichnung zeigen:
- Figur 1: eine Gesamtansicht einer erfindungsgemäßen Baukreissäge,
- Figur 2: eine Seitenansicht der Anordnung gemäß Figur 1 in der Transportstellung,
- Figur 3: eine vergrößerte Ansicht der Verbindung zwischen Rechteckrahmen und umlegbarer Verlängerung im Schnitt und
- Figur 4: eine Seitenansicht der Anordnung gemäß Figur 3.

Hauptanwendungsgebiet der Erfindung sind Tischkreissägen in Form von Baustellenkreissägen.

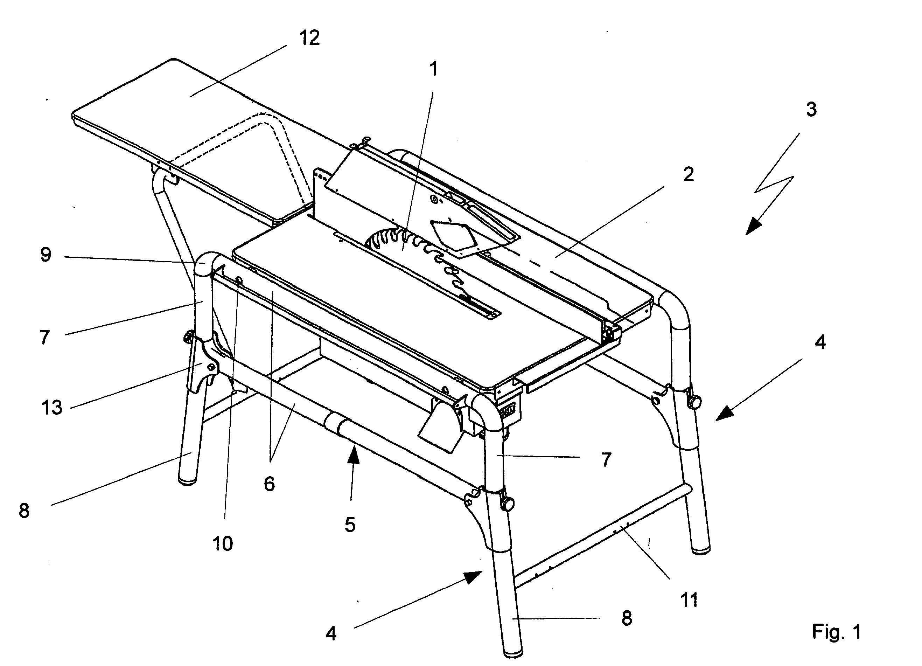

Die der Figur 1 zugrunde liegende Kreissäge besitzt einen von dem mittels eines zugeordneten Motors antreibbaren Kreissägenblatt 1 durchgriffenen Maschinentisch 2, der auf einem Maschinengestell 3 aufgenommen ist. Bei dem genannten Motor kann es sich um einen an der Unterseite des Maschinentisches 2 anbringbaren Elektromotor handeln.

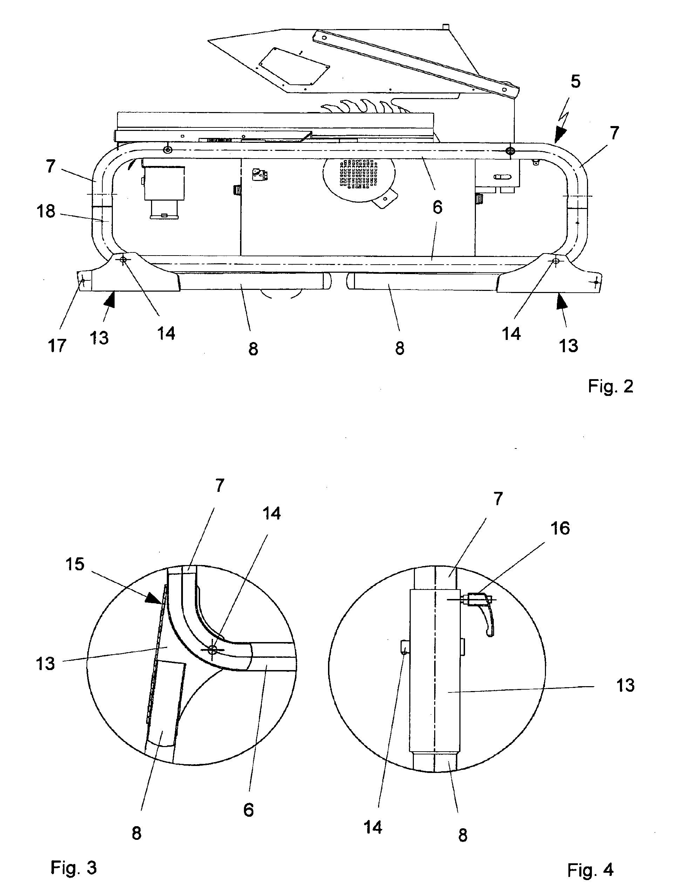

Das Maschinengestell wird durch ein als Rohrgestell ausgebildetes Rahmengestell gebildet. Dieses besteht aus zwei den Maschinentisch 2 flankierenden Seitenteilen 4, die jeweils ein ihren oberen Bereich bildendes Rahmenelement in Form eines Rechteckrahmen 5 aufweisen, der tischparallele längere Schenkel 6 und diese verbindende, quer hierzu verlaufende, kürzere Schenkel 7 aufweist. Dieser ist ein in sich geschlossener Rahmen, der eine hohe Stabilität und Formsteifigkeit ergibt. Den quer zur Tischebene verlaufenden Schenkeln 7 sind umklappbare Verlängerungen 8 zugeordnet, die von einer der Figur 1 zugrunde liegenden, nach unten abgehenden Standstellung in eine der Figur 2 zugrunde liegende, umgelegte Transportstellung schwenkbar sind und umgekehrt. Die Verlängerungen 8 fungieren somit als den unteren Gestellbereich bildende, schwenkbar am jeweils zugeordneten Rechteckrahmen 5 angebrachte, umlegbare Gestellbeine.

Die Rechteckrahmen 5 werden durch Rohrabschnitte gebildet, die durch den Eckbereichen zugeordnete Bogenstücke 9 miteinander verbunden sind. Die Verbindung kann zweckmäßig als Steckverbindung ausgebildet sein. Dementsprechend sind die Bogenstücke 9 mit angeformten Stutzen versehen, die in die zugewandten Enden der anschließenden Rohrabschnitte einführbar sind. Zur Sicherung kann eine gegenseitige Verspannung bzw. Verklemmung vorgesehen sein, d.h. die Stützen sind in die Rohrabschnitte einpressbar. Auch eine Schraub- und/oder Schweißverbindung etc. wäre denkbar. Die oberen, längeren Schenkel 6 der Rechteckrahmen 5 der beiden Seitenteile 4 liegen an der jeweils benachbarten Längsseite des Maschinentisches 2 an und sind hiermit verschraubt, wie durch Schrauben 10 angedeutet ist. Auf diese Weise wird die den Maschinentisch 2 bildende Tischplatte in den Gestellaufbau integriert und bildet praktisch ein die beiden Seitenteile 4 distanzierendes Element.

Die bezüglich der Gestellbreite einander gegenüberliegenden, hinteren und vorderen Verlängerungen 8 der Rechteckrahmen 5 der beiden Seitenteile 4 sind durch jeweils eine Querstrebe 11 miteinander verbunden und so in Seitenrichtung stabilisiert. An diesen Querstreben können Zusatzaggregate abgestützt sein. Im dargestellten Beispiel ist dies anhand einer Tischverlängerung 12 verdeutlicht, die an der vorderen Querstrebe 11 abgestützt ist.

Zur Bildung einer Schwenklagerung der umlegbaren Verlängerungen 8 ist diesen jeweils ein T-förmiges Knotenblech 13 zugeordnet. Die Knotenbleche 13 bilden jeweils, wie am besten aus Figur 3 ersichtlich ist, eine im Querschnitt U-förmige Tasche, deren Seitenwände mit ihren freien, den mittleren T-Schenkel bildenden Enden einen zugeordneten Rohrbereich des Rechteckrahmens 5 umfassen und durch einen Lagerbolzen 14 schwenkbar hieran gelagert sind. Der Lagerbolzen 14 befindet sich im Bereich einer Rahmenecke des Rechteckrahmens 5, zweckmäßig in der dem anschließenden, unteren Rahmenschenkel 6 zugewandten Hälfte des Eckbereichs.

Der die Seitenwände verbindende Bogen der im Querschnitt U-förmigen Tasche bildet praktisch eine Rinne, wobei die zugeordnete Verlängerung 8, wie Figur 3 anschaulich zeigt, mit ihrem oberen Ende in den durch den im aufgestellten Zustand nach unten weisenden T-Schenkel gebildeten Rinnenabschnitt eingreift und hierin festgelegt ist. Dabei kann eine Schweiß- oder Schraubverbindung oder vorzugsweise eine Klemmverbindung vorgesehen sein. Der durch den gegenüberliegenden, in der aufgeklappten Stellung nach oben weisenden T-Schenkel gebildete Rinnenabschnitt fungiert als Anschlag, der in der aufgestellten Stellung am benachbarten Rohrbereich in Form des unteren Endes des benachbarten kürzeren Schenkels 7 bzw. des hieran anschließenden Bereichs des Bogenstücks 9 zur Anlage kommt, wie in Figur 3 durch den Anschlag 15 angedeutet ist.

Um in der aufgeklappten Stellung eine stabile Anordnung zu gewährleisten, können die aufgeklappten Verlängerungen 8 durch lösbar anbringbare Sicherungsschrauben 16 in Schwenkrichtung blockiert werden. Bei den Sicherungsschrauben 16 handelt es sich zweckmäßig um mit einem Handgriff versehene Schrauben, wie aus Figur 4 ersichtlich ist. Die jeweils als Anschlag 15 fungierenden Endbereiche der Knotenbleche 13 sind, wie am besten aus Figur 2 ersichtlich ist, mit den Sicherungsschrauben 16 zugeordneten Bohrungen 17 versehen. Im Bereich der benachbarten kürzeren Schenkel7 der Rechteckrahmen 5 sind in der aufgeklappten Stellung der Verlängerungen 8 mit den Bohrungen 17 fluchtende Gewindebohrungen 18 vorgesehen, in welche die Schrauben 16 mit ihrem Schraubenschaft einschraubbar sind.

Die T-förmigen Knotenbleche 13 sind zweckmäßig so ausgebildet, dass die als umklappbare Tischbeine fungierenden, jeweils einem Seitenteil angehörenden vorderen und hinteren Verlängerungen 8 leicht dachförmig gegeneinander angestellt sind. Auch eine dachförmig gegeneinander geneigte Anordnung der in Querrichtung einander gegenüberliegenden Verlängerungen 4 wäre denkbar.

Die zum Anschluss der umlegbaren Verlängerungen 8 an die Rechteckrahmen 5 vorgesehenen Knotenbleche 13 sind so ausgebildet und angeordnet, dass die Verlängerungen 8 im umgeklappten Zustand, wie aus Figur 2 ersichtlich ist, etwa parallel zum benachbarten unteren Rahmenschenkel 6 verlaufen und hieran anliegen. In der Länge sind die Verlängerungen 8 so bemessen, dass ihre über die zugeordnete Schwenkachse 14 vorstehende Länge höchstens der Hälfte des Abstands zwischen den vorderen und hinteren Schwenkachsen 14 entspricht. Auf diese Weise wird eine Überschneidung der im umgeklappten Zustand aufeinander zu strebenden Verlängerungen 8 vermieden, so dass diese sauber am benachbarten unteren Rahmenschenkel 6 anliegen können.

## Patentansprüche

1. Kreissäge, insbesondere Baukreissäge, mit einem einen vom Kreissägenblatt (1) durchgriffenen Maschinentisch (2) aufnehmenden Maschinengestell (3), das als Rohrgestell ausgebildet ist und aus zwei Seitenteilen (4) besteht, die jeweils ein Oberteil mit quer zur Tischebene verlaufenden Schenkeln (7) und einem parallel zur Tischebene verlaufenden Schenkel (6) aufweisen, wobei von den quer zur Tischebene verlaufenden Schenkeln (7) einen unteren Gestellbereich bildende, umklappbare Verlängerungen abgehen, **dadurch gekennzeichnet, dass**
der Maschinentisch (2) von den Seitenteilen (4) des Maschinengestells (3) flankiert ist,
dass die Oberteile der Seitenteile (4) als in sich geschlossene Rechteckrahmen (5) ausgebildet sind,
dass der Maschinentisch (2) mit seinen Längsseiten an einem jeweils benachbarten, oberen, tischparallelen Schenkel (6) eines Rechteckrahmens (5) anliegt und hiermit verschraubt ist
und dass die von den quer zur Tischebene verlaufenden Schenkeln (7) abgehenden Verlängerungen (8) durch T-förmige Knotenbleche (13) schwenkbar an die Rechteckrahmen (5) angeschlossen sind, wobei die Verlängerungen (8) mit ihrem oberen Ende an einem T-Schenkel des zugeordneten Knotenblechs (13) befestigt sind, dessen mittlerer T-Schenkel im einem anschließenden unteren Rahmenschenkel (6) des Rechteckrahmens (5) zugewandten Bereich einer Rahmenecke eines Rechteckrahmens (5) schwenkbar gelagert ist und dessen weiterer T-Schenkel als Anschlag fungiert, der bei aufgerichteter Verlängerung (8) am unteren Endbereich eines benachbarten, quer zur Tischebene verlaufenden Schenkels (7) eines Rechteckrahmens (5) zur Anlage kommt.

2. Kreissäge nach Anspruch 1, **dadurch gekennzeichnet, dass** das das Maschinengestell (2) bildende Rohrgestell aus miteinander verbundenen Rohrabschnitten besteht.

3. Kreissäge nach Anspruch 2, **dadurch gekennzeichnet, dass** die Rahmenschenkel (6, 7) durch den Rahmenecken zugeordnete Bogenstücke (9) miteinander verbunden, vorzugsweise an die benachbarten Bogenstücke (9) ansteckbar sind.

4. Kreissäge nach Anspruch 3, **dadurch gekennzeichnet, dass** die Steckverbindung zwischen Rahmenschenkeln (6, 7) und Bogenstücken (9) als Pressverbindung ausgebildet ist.

5. Kreissäge nach Anspruch 1, **dadurch gekennzeichnet, dass** der als Anschlag (15) ausgebildete Schenkel des Knotenblechs (13) in der aufgeklappten Stellung der zugeordneten Verlängerung (8) an einem benachbarten Bereich des zugehörigen Rechteckrahmens (5) festlegbar ist.

6. Kreissäge nach Anspruch 5, **dadurch gekennzeichnet, dass** zur Festlegung des den Anschlag (15) bildenden Schenkels des Knotenblechs (13) am benachbarten Rechteckrahmen (5) eine mit einem Handgriff versehene Sicherungsschraube (16) vorgesehen ist.

7. Kreissäge nach einem der vorhergehenden Ansprüche, **dadurch gekennzeichnet, dass** das Knotenblech (13) als im Querschnitt U-förmige Tasche ausgebildet ist, wobei die durch den Bogen der Tasche gebildete Rinne die zugeordnete Verlängerung (8) aufnimmt und den Anschlag (15) bildet und wobei die freien Enden der Seitenwände der Tasche den zugeordneten Rechteckrahmen (5) im Bereich der Schwenkachse (14) flankieren.

8. Kreissäge nach einem der vorhergehenden Ansprüche, **dadurch gekennzeichnet, dass** zumindest die in Längsrichtung des Maschinengestells (3) einander gegenüberliegenden Verlängerungen (8) dachförmig gegeneinander angestellt sind.

9. Kreissäge nach einem der vorhergehenden Ansprüche, **dadurch gekennzeichnet, dass** die bezüglich der Gestellbreite jeweils einander gegenüberliegenden Verlängerungen (8) jeweils durch eine Querstrebe (11) miteinander verbunden sind.

10. Kreissäge nach Anspruch 9, **dadurch gekennzeichnet, dass** an wenigstens einer Querstrebe (11) ein Zusatzaggregat (12) abgestützt ist.

11. Kreissäge nach einem der vorhergehenden Ansprüche, **dadurch gekennzeichnet, dass** die über die Schwenkachse (14) vorstehende Länge der Verlängerungen (8) höchstens der Hälfte des Abstands zwischen der Position der Schwenkachsen (14) der in Längsrichtung einander gegenüberliegenden Verlängerungen (8) entspricht.

12. Kreissäge nach einem der vorhergehenden Ansprüche, **dadurch gekennzeichnet, dass** die Knotenbleche (13) so ausgebildet sind, dass die Verlängerungen (8) im umgeklappten Zustand am jeweils benachbarten, unteren Schenkel (6) des zugehörigen Rechteckrahmens (5) anliegen.

## Claims

1. A circular saw, especially a builder's circular saw, comprising a machine frame (3) which accommodates a machine table (2) that is penetrated by a circular saw blade (1), said machine frame (3) being arranged as a tubular frame and consisting of two side parts (4) which respectively comprise an upper part with legs (7) extending transversely to the table plane and a leg (6) extending parallel to the table plane, wherein foldable extensions which form a bottom frame region originate from legs (7) extending transversely to the table plane, **characterized in that**
the machine table (2) is flanked by the side parts (4) of the machine frame (3), the upper parts of the side parts (4) are arranged as coherent closed rectangular frames (5),
the machine table (2) rests with its longitudinal sides on a respectively adjacent upper leg (6) of a rectangular frame (5), said leg being parallel to the table, and is screwed together therewith,
and the extensions (8) originating from the legs (7) extending transversely to the table plane are pivotably connected by T-shaped gusset plates (13) to the rectangular frames (5), wherein the extensions (8) are fixed with their upper end to a T-leg of the associated gusset plate (13), whose middle T-leg is pivotably mounted in a region of a frame corner of a rectangular frame (5) facing an adjacent bottom frame leg (6) of the rectangular frame (5), and whose further T-leg acts as a stop, which in the case of an upright extension (8) comes to rest on the bottom end region of an adjacent leg (7) of a rectangular frame (5), said leg extending transversely to the table plane.

2. A circular saw according to claim 1, **characterized in that** the tubular frame forming the machine frame (2) consists of mutually connected tubular sections.

3. A circular saw according to claim 2, **characterized in that** the frame legs (6, 7) are connected to each other by bent segments (9) associated with the frame corners, preferably pluggable into the adjacent bent segments (9).

4. A circular saw according to claim 3, **characterized in that** the plug connection between frame legs (6, 7) and bent segments (9) is arranged as a compression connection.

5. A circular saw according to claim 1, **characterized in that** the leg of the gusset plate (13) arranged as a stop (15) can be fixed in the folded-out position of the associated extension (8) to an adjacent region of the associated rectangular frame (5).

6. A circular saw according to claim 5, **characterized in that** a locking screw (16) having a handle is provided for fixing the leg of the gusset plate (13), which forms the stop, to the adjacent rectangular frame (5).

7. A circular saw according to one of the preceding claims, **characterized in that** the gusset plate (13) is arranged as a pocket which is U-shaped in its cross-section, wherein the groove formed by the bend of the pocket accommodates the associated extension (8) and forms the stop (15), and wherein the free ends of the side walls of the pocket flank the associated rectangular frame (5) in the region of the swivel pin (14).

8. A circular saw according to one of the preceding claims, **characterized in that** at least the extensions (8) situated opposite of each other in the longitudinal direction of the machine frame (3) are disposed against each other in a roof-like manner.

9. A circular saw according to one of the preceding claims, **characterized in that** the extensions (8) which are situated opposite of each other with respect to the frame width are respectively connected to each other by a cross-member (11).

10. A circular saw according to claim 9, **characterized in that** an additional unit (12) is supported on at least one cross-member (11).

11. A circular saw according to one of the preceding claims, **characterized in that** the length of the extensions (8) protruding beyond the swivel pin (14) corresponds at most to half the distance between the position of the swivel pins (14) of the extensions (8) which are opposite of each other in the longitudinal direction.

12. A circular saw according to one of the preceding claims, **characterized in that** the gusset plates (13) are arranged in such a way that the extensions (8) rest in the folded-out state on the respectively adjacent bottom leg (6) of the associated rectangular frame (5).

## Revendications

1. Scie circulaire, en particulier scie circulaire de construction, comprenant un bâti de machine (3) qui reçoit une table de machine (2) traversée par la lame de scie circulaire (1) et qui est réalisé en tant que bâti tubulaire et se compose de deux parties latérales (4) qui présentent chacune une partie supérieure avec des branches (7) s'étendant transversalement au plan de table et avec une branche (6) s'étendant parallèlement au plan de table, des rallonges rabattables qui forment une zone inférieure de bâti s'étendant à partir des branches (7) s'étendant transversalement au plan de table, **caractérisée par le fait que**
la table de machine (2) est flanquée par lesdites parties latérales (4) du bâti de machine (3),
que les parties supérieures des parties latérales (4) sont réalisées en tant que cadre rectangulaire (5) fermé en lui-même,
que la table de machine (2) s'applique par ses grands côtés sur une branche (6) supérieure d'un cadre rectangulaire (5), respectivement voisine et parallèle à la table, et est vissée avec celle-ci,
et que lesdites rallonges (8) qui s'étendent à partir des branches (7) s'étendant transversalement au plan de table sont raccordées à pivotement, par des goussets d'assemblage (13) en T, aux cadres rectangulaires (5), les rallonges (8) étant fixés par leur extrémité supérieure sur une branche de T du gousset d'assemblage (13) associé dont la branche de T centrale est logée à pivotement dans la zone d'un coin de cadre d'un cadre rectangulaire (5), qui est tournée vers une branche de cadre (6) inférieure contiguë du cadre rectangulaire (5), et dont l'autre branche de T fait fonction de butée qui, lorsque la rallonge (8) est remise debout, vient en appui sur la zone terminale inférieure d'une branche (7) voisine d'un cadre rectangulaire (5), qui s'étend transversalement au plan de table.

2. Scie circulaire selon la revendication 1, **caractérisée par le fait que** le bâti tubulaire formant le bâti de machine (2) se compose de tronçons tubulaires reliés entre eux.

3. Scie circulaire selon la revendication 2, **caractérisée par le fait que** les branches de cadre (6, 7) sont reliées entre elles par des pièces en arc (9) associées aux coins de cadre, de préférence aptes à être rapportées sur les pièces en arc (9) voisines.

4. Scie circulaire selon la revendication 3, **caractérisée par le fait que** l'assemblage à emboîtement entre les branches de cadre (6, 7) et les pièces en arc (9) est réalisé comme assemblage serré.

5. Scie circulaire selon la revendication 1, **caractérisée par le fait que**, dans la position dépliée de la rallonge (8) associée, la branche du gousset d'assemblage (13) qui est réalisée comme butée (15) peut être immobilisée sur une zone voisine du cadre rectangulaire (5) associé.

6. Scie circulaire selon la revendication 5, **caractérisée par le fait que**, pour immobiliser, sur le cadre rectangulaire (5) voisin, la branche du gousset d'assemblage (13) qui forme ladite butée (15), on prévoit une vis de sécurité (16) pourvue d'une poignée.

7. Scie circulaire selon l'une quelconque des revendications précédentes, **caractérisée par le fait que** ledit gousset d'assemblage (13) est réalisé comme poche présentant une forme d'U en coupe transversale, la rigole formée par l'arc de la poche recevant la rallonge (8) associée et formant ladite butée (15), et les extrémités libres des parois latérales de la poche flanquant le cadre rectangulaire (5) associé au niveau de l'axe de pivotement (14).

8. Scie circulaire selon l'une quelconque des revendications précédentes, **caractérisée par le fait qu'**au moins les rallonges (8) qui sont situées en regard les unes des autres dans la direction longitudinale du bâti de machine (3) sont placées en forme de toit les unes contres les autres.

9. Scie circulaire selon l'une quelconque des revendications précédentes, **caractérisée par le fait que** les rallonges (8) qui sont situées respectivement en regard les unes des autres par rapport à la largeur du bâti sont reliées entre elles respectivement par une entretoise transversale (11).

10. Scie circulaire selon la revendication 9, **caractérisée par le fait que** sur au moins une entretoise transversale (11) est appuyée une unité supplémentaire (12).

11. Scie circulaire selon l'une quelconque des revendications précédentes, **caractérisée par le fait que** la longueur des rallonges (8) qui fait saillie au-delà de l'axe de pivotement (14) correspond tout au plus à la moitié de la distance entre la position des axes de pivotement (14) des rallonges (8) situées en regard les unes des autres dans la direction longitudinale.

12. Scie circulaire selon l'une quelconque des revendications précédentes, **caractérisée par le fait que** les goussets d'assemblage (13) sont réalisés de manière à ce que, en état rabattu, les rallonges (8) s'appliquent sur la branche (6) inférieure respectivement voisine du cadre rectangulaire (5) associé.
